# EUROPEAN PATENT SPECIFICATION

(11) **EP 2 083 577 B1**
(45) Date of publication and mention of the grant of the patent: **03.07.2013**
(21) Application number: 07846188.6
(22) Date of filing: 28.12.2007
(51) Int. Cl.: H04L 29/06

(54) **USER DEVICE AND REGISTRATION METHOD OF USER DEVICE**
NUTZERGERÄT UND REGISTRIERUNGSVERFAHREN FÜR NUTZERGERÄT
DISPOSITIF UTILISATEUR ET PROCÉDÉ D'ENREGISTREMENT DU DISPOSITIF UTILISATEUR

(30) Priority: 28.12.2006 CN 200610132388
(43) Date of publication of application: 29.07.2009
(73) Proprietor: Huawei Technologies Co., Ltd., Shenzhen, Guangdong Province 518129 (CN)
(72) Inventor: XIE, Lei, Shenzhen Guangdong 518129 (CN); ZHU, Lei, Shenzhen Guangdong 518129 (CN)
(74) Representative: Maiwald Patentanwalts GmbH
(86) International application number: PCT/CN2007/071362
(87) International publication number: WO 2008/080349

(56) References cited:
- EP-A- 1 555 838
- EP-A1- 2 086 167
- WO-A-2006/118416
- WO-A-2007/115754
- CN-A- 1 805 452
- CN-A- 1 878 414
- KR-A- 20040 098 308
- US-A1- 2005 202 819
- 3GPP SA WG2: "Digital cellular telecommunications system (Phase 2+); Universal Mobile Telecommunications System (UMTS); IP Multimedia (IM) session handling; IM call model; Stage 2 (3GPP TS 23.218 version 7.4.0 Release 7)" 20061201; 20061200, 1 December 2006 (2006-12-01), pages 1-61, XP014036288
- "Enhanced Initial Filter Criteria for 3GPP IMS" IP.COM JOURNAL, IP.COM INC., WEST HENRIETTA, NY, US, 18 July 2006 (2006-07-18), XP013115124 ISSN: 1533-0001
- "3rd Generation Partnership Project; Technical Specification Group Service and System Aspects; Service requirements for Personal Network Management (PNM); Stage 1 (Release 8)", 3GPP STANDARD; 3GPP TS 22.259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.2.0, 1 December 2006 (2006-12-01), pages 1-26, XP050361297,
- BENQ MOBILE: "Procedures for PNM User Interactions", 3GPP DRAFT; C1-061441_UE-PNM-PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Da Lian, China; 20060811, 11 August 2006 (2006-08-11), XP050023401, [retrieved on 2006-08-11]

## Description

### Field of the Invention

The present invention relates to the field of IP Multimedia Subsystem (IMS) technologies and in particular to a user equipment, a serving-call session control function entity and a user equipment registration method in an IMS system.

### Background of the Invention

With the development of mobile telecommunication technologies, conventional voice communication service can not satisfy the demand for communication, and it is highly desirable to experience brand new multimedia service. The multimedia service includes not only simple service of audio and video communication but also service of instant messaging, same-address browsing, interoperation, stream media, etc., especially service of integrating new communication approaches with conventional voice communication.

Additionally, in view of the trend that the Internet and the telecommunication network are being integrated, the 3^{rd} Generation Partnership Project (3GPP) of the International Organization for Standardization introduces an IP Multimedia Subsystem (IMS) with an all-IP service network architecture supporting multimedia service based upon a packet bearer network, so as to implement various multimedia applications by means of a standardized open architecture in the communication network, thereby bring the users more choices and more abundant experiences.

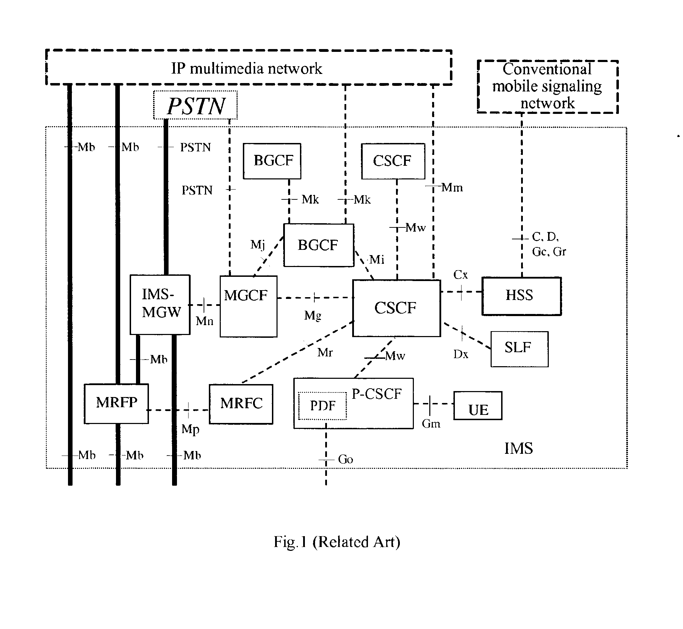

Figure 1 is a schematic diagram illustrating an IMS system specified by the 3GPP. The IMS system mainly includes a Call Session Control Function (CSCF), a Media Gateway Control Function (MGCF), a Media Resource Function (MRF), and a Home Subscriber Server (HSS), etc.

The CSCF may further be categorized into three logic entities: a Serving-Call Session Control Function (S-CSCF), a Proxy-Call Session Control Function (P-CSCF), and an Interrogating-Call Session Control Function (I-CSCF). The S-CSCF is a service switch center of the IMS, and is adapted to control sessions, to maintain a session status, to manage user equipment information, and to generate billing information, etc. S-CSCFs connected with different Application Servers (AS) can achieve different service functions. The P-CSCF is an access point where the User Equipment (UE) has access to the IMS, which accomplishes user equipment registration, and is responsible for Quality of Service (QoS) control, security management, etc. The I-CSCF is responsible for interworking with the IMS domains, manages allocation and selection of the S-CSCF, hides topology and configuration of the network from outside, generates charging data, etc. The MGCF enables interworking of the IMS with other types of networks. The MRF mainly provides media resources. The HSS mainly stores subscription data and configuration information and the like of the user equipment.

It shall be noted that the IMS network as specified by the 3GPP can also be applied over a packet network specified by the 3GPP2 to offer interworking with various types of networks and to be independent of the type of the user equipment. Therefore, not only the IMS network can be applied over 3GPP related networks and applications, but also the IMS architecture can be used to implement services and applications of other types of access networks and bearer networks.

Currently, the IMS system provides a user with an environment in which a single user may have a plurality of user equipments. In this environment, the user can make use of multiple services in the network based upon subscription with an operator, and some of the user equipments have a capability of achieving multiple services (i.e. a capability of acting as a client of several application servers). However, due to reasons like charging, use habit of the user, etc., the user may not wish to register each of the user equipments of the user with the corresponding application server, which provides the user equipment with the service, when registering the user equipments with the IMS system, but would like to register the user equipments with the application servers which have the required services only if necessary. Alternatively, due to presetting of the user or addition of an accessory to the user equipment, the capabilities that the user equipment registering with the IMS system registers in the network may have not embodied completely the existing capabilities of the user equipment. Alternatively, the user equipment may be required to re-register due to reasons such as that the existing bearer network changes and that the user equipment has to be switched from the existing network to another network.

EP 1555838 A2 discloses mechanism and method for initiating a packet-based service session in a public mobile communication system, especially a service session for a group of users. In order to accomplish a service initiation even if the terminals of the users are in a disconnected state with respect to the packet-switched domain of the mobile communication system, a triggering message is sent from one user terminal to the other terminals of the group. The triggering message includes information about a packet-based service session to be started, and it may be a message that can be sent via the mobile communication system to a mobile terminal that is in a disconnected state with respect to the packet-switched domain. In response to the reception of the triggering message, the other terminals are brought to a state allowing reception of packets belonging to the packet-based service session.

WO 2006/118416 A1 provides a method for requesting an IMS unregistered UE to perform IMS registration, comprising steps of: a) initiating an IMS domain session or sending an IMS relevant signaling to a called subscriber by a UE A; b) informing the UE A information that the called subscriber has not registered with the IMS by the network; c) requesting the called terminal to conduct IMS registration by the UE A; and d) restarting the IMS session after the called terminal completes the IMS registration. With the present invention, an IMS unregistered UE can also perform IMS service.

European patent application EP 2086167 A1 provides a third party registration procedure where personal network management (PNM) UE1 invites PNM UE2 to join a personal network (PN). In the procedure, the UE 1 initiates a request for a third party registration on behalf of the UE2; after the UE1 is authenticated by a network application function (NAF) and is checked the authority of the UE1 by a PNM server; the PNM server sends to the UE2 an invitation for inviting the UE2 to register; when the UE2 agrees to join PN, the UE2 may send a registration request to the PNM server to join in the PN.

"3rd Generation Partnership Project; Technical Specification Group Service and System Aspects; Service requirements for Personal Network Management (PNM); Stage 1(Release 8)", 3GPP STANDARD; 3GPP TS 22.259, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V8.2.0, 1 December 2006, pages 1-26, XP050361297, provides a general description of a personal network. BenQ Mobile 'Procedures for PNM User Interactions", 3GPP C1-061441_UE-PNM-Procedures, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. CT WG1, no. Da Lian, China; 20060811, 11 August 2006, XP050023401, describes a PNM registration procedure between UE and PNM AS.

In the prior art, in order to automatically re-register the user equipment with an application server that the user requires, or to register a designated capability with the IMS system or another network, typically re-registration is initiated manually from the user equipment. Thus, the user equipment is registered to the application server(s) required, or a designated capability of the user equipment is registered to the IMS system, or the user equipment is registered to another network. This influences greatly the experience of the user. There is a need for a mechanism to register automatically the user equipment with the application server that the user requires, or to register automatically a designated capability of the user equipment with the IMS system, or to register automatically the user equipment with another network.

### Summary of the Invention

The present invention is directed at a method for automatically registering user equipment with an application server according to claim 1, a method for automatically registering a designated capability with a network according to claim 5, and a user equipment according to claim 8. Further embodiments are defined in the dependent claims.

According to examples of the invention, the first user equipment which initiates registration firstly determines the second user equipment which is required to register automatically with an application server or is required to register automatically a designated capability with an IMS system or is required to register automatically with another network. Then, the first user equipment sends a serving-CSCF a registration instruction requesting the second user equipment to register automatically with the corresponding application server or to register automatically the designated capability with the IMS system or to register automatically with another network. The serving-CSCF sends the second user equipment the registration instruction requesting the second user equipment to register automatically with the corresponding application server or to register automatically the designated capability with the IMS system or to register automatically with another network. After receiving the registration instruction, the second user equipment may register automatically with the corresponding application server or register automatically the designated capability with the IMS system or register automatically with another network. Thus, it is possible for the user equipment to register automatically with the application server that a user requires or to register automatically the designated capability with the IMS system or to register automatically with another network. Therefore, the invention can further improve the experience of the user.

### Brief Description of the Drawings

Figure 1 is a schematic diagram illustrating an IMS system in the prior art;

Figure 2 is a flow chart illustrating a method for registering automatically user equipment with an application server according to an embodiment of the invention;

Figure 3 is a schematic diagram illustrating a flow of registering automatically user equipment which has not registered CPM application service with a CPM application server in an IMS system according to an embodiment of the invention;

Figure 4 is a schematic diagram illustrating a flow of registering automatically user equipment which has not registered CPM application service with a CPM application server in an IMS system according to an embodiment of the invention;

Figure 5 is a flow chart illustrating a method for registering automatically a designated capability by user equipment with a network according to an embodiment of the invention;

Figure 6 is a schematic diagram illustrating a flow of registering automatically a designated capability of user equipment with a network in an IMS system according to an embodiment of the invention;

Figure 7 is a schematic diagram illustrating a flow of registering automatically user equipment with another network in an IMS system according to an embodiment of the invention;

Figure 8 is a schematic diagram illustrating a function module of a serving-CSCF for registering automatically user equipment with an application server according to an embodiment of the invention;

Figure 9 is a schematic diagram illustrating a function module of user equipment initiating registration for registering automatically user equipment with an application server according to an embodiment of the invention; and

Figure 10 is a schematic diagram illustrating a function module of user equipment implementing automatic registration for registering automatically user equipment with an application server according to an embodiment of the invention.

### Detailed Description of the Invention

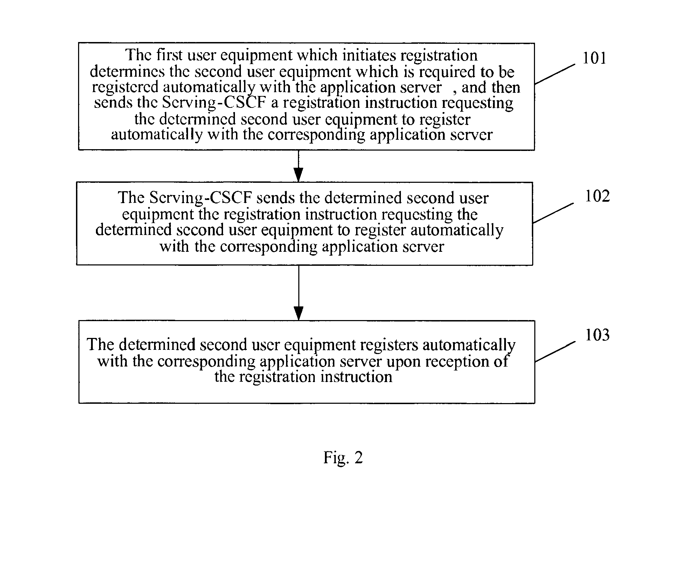

Referring to Figure 2, it is a flow chart illustrating a method for registering automatically user equipment with an application server according to an embodiment of the invention.

Network entities involved in this embodiment mainly include an application server, a user equipment which initiates registration (referred to as a first user equipment in this embodiment for distinguishing), a user equipment which is required to be registered automatically with a corresponding application server that a user requires (referred to as a second user equipment in this embodiment for distinguishing), and an S-CSCF function entity of an IMS system. In a specific implementation, SIP messages can be used for communication between the network entities. For example, an INVITE message can be used between the first user equipment and the S-CSCF, a NOTIFY message carrying corresponding registration instruction information or parameters can be used between the S-CSCF and the second user equipment, and a REFER message can be used between the application server and the S-CSCF in such a way that the application server sends the S-CSCF the REFER message requesting the second user equipment to register automatically with the application server. Specifically, a registration procedure mainly includes the following steps.

Block 101: The first user equipment initiating registration determines the second user equipment which is required to register automatically with the application server, and then sends the S-CSCF a registration instruction requesting the second user equipment to register automatically with the corresponding application server.

In a specific implementation, the first user equipment may determine the second user equipment which is required to register automatically in various ways, such as in accordance with equipment information configured in advance, through automatic network search, or through interrogating the application server. The details are as follows.

Firstly, the first user equipment requests the application server via the S-CSCF for a view of information of the second user equipment which has not registered application service with the application server. Secondly, the application server returns, via the S-CSCF, the information of the second user equipment which has not registered the application service to the first user equipment initiating registration. Finally, the first user equipment may determine the second user equipment which is required to register automatically with the application server in accordance with the feedback information.

Block 102: The S-CSCF sends the determined second user equipment the registration instruction requesting the determined second user equipment to register automatically with the corresponding application server.

It shall be noted that the system may control authorization of the first user equipment initiating registration. In other words, prior to execution of the Block 102, the S-CSCF may send the corresponding application server the registration instruction requesting the determined second user equipment to register automatically with the application server as well. If the application server receives the registration instruction, the application server responds to the request from the S-CSCF by sending the S-CSCF the registration instruction requesting the determined second user equipment to register automatically with the application server.

Block 103: The determined second user equipment registers automatically with the corresponding application server upon reception of the registration instruction, and in a specific implementation, the determined second user equipment may register firstly with the IMS system and then register with the corresponding application server.

The application server in the embodiment of invention may be a Converged IP message (CPM) application server, an Push To Talk (PTT) over Cellular (PoC) application server, an Instant Message (IM) application server, or a Presence application server, as well as other available application servers. The following embodiments take a CPM application server as an example.

When registering with an IMS network, user equipment, which has a capability of acting as a client of a CPM application server according to an embodiment of the invention, may carry a corresponding identifier to indicate that it has the capability of acting as a client of the CPM application server, and may carry an identifier requesting for registering with the CPM application server as well, which will enable the system to register the user equipment with the CPM application server. When registering with the IMS network, the user equipment may carry only the identifier indicating that it has the capability of acting as a client of the CPM application server, and thus the user equipment will not be registered with the CPM application server when registering with the IMS network. For example, an identifier of CPM application service may be put in the Contact message header of a registration message with a 'feature tag' manner. When the user equipment registers with the S-CSCF, the S-CSCF knows that the user equipment has the CPM capability. Thus, if only corresponding information is configured in initial filtering rules of the S-CSCF, the S-CSCF will enable registration with the CPM application server according to the initial filtering rules. For example, a parameter of 'pref tag' may be used in the Contact message. In other words, if the identifier of the CPM application service exists in the Contact message header and the 'pref tag' exists in the message, the S-CSCF registers with the CPM application server. If the identifier of the CPM application service exists in the header field-value of Contact header-name but the 'pref tag' does not exist in the message, the S-CSCF does not register with the CPM application server. These determinations may be configured in the initial filtering rules of the S-CSCF.

The IMS system may store capability information of user equipment in a S-CSCF. After a user has registered with a CPM application server through certain user equipment, the CPM application server may subscribe for registration status information of the user from the S-CSCF. Therefore, the CPM application server may obtain other public user identities of the user and private user identities bound with these public user identities, and may request the S-CSCF, through the private user identities, for obtaining the capability information of the user equipment reported during registration. Thus, a CPM user may send the CPM application server, via a registered user equipment, a request for a view of information of the user's other user equipments, which currently have not registered with the CPM application server but have the capability of acting as clients of the CPM application server, such as device capability of the other user equipments which have not registered with the CPM application server, a private address of the user equipment, etc. The CPM user may also obtain the device information in some other ways, such as through automatic web page search, viewing the equipment information configured in advance, etc.

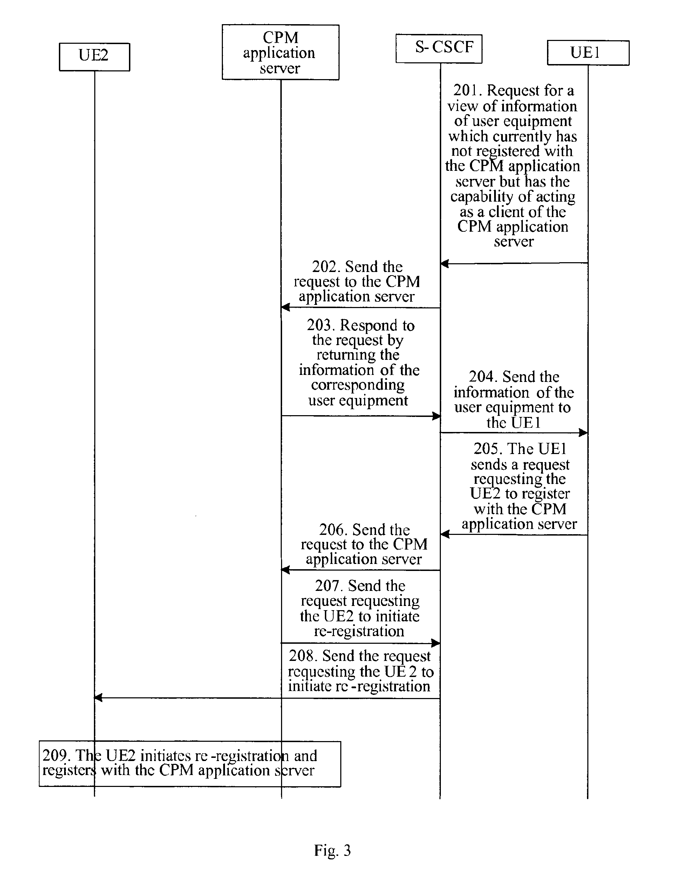

Referring to Figure 3, it is a schematic diagram illustrating a flow of registering automatically user equipment which has not registered with CPM application service with a CPM application server in an IMS system according to an embodiment of the invention.

It is assumed in this embodiment that a user registers two user equipments with capabilities of acting as clients of a CPM application server in a network, including a UE1 which registers with a CPM application server and a UE2 which registers with a game service. When registering with the network, the UE1 and the UE2 each carry an identifier indicating that it has the capability of acting as a client of the CPM application server, and the IMS system stores the capability information in a S-CSCF. The CPM application server subscribes for registration status information of the user from the S-CSCF and thus may obtain timely information of other public user identities of the user and capabilities and private addresses of the user equipments bound with these public user identities, etc. Specifically, automatic registration procedure in this embodiment mainly includes the following steps.

Step 201: The user sends the CPM application server, via the UE1, a request for a view of information of user equipments which currently have not registered with the CPM application server but have the capabilities of acting as clients of the CPM application server, and the request is sent firstly to the S-CSCF.

Step 202: The S-CSCF sends the request to the CPM application server.

Step 203: The CPM application server responds to request sent from the UE1 by sending the information of the user equipments which currently have not registered with the CPM application server but have the capabilities of acting as clients of the CPM application server, and the response is sent firstly to the S-CSCF.

Step 204: The S-CSCF sends the response to the UE1.

Step 205: The user views the information and determines to re-register the UE2 with the CPM application server in such a way that the user sends the CPM application server, via the UE1, a request for re-registration of the UE2, and the request for re-registration is sent firstly to the S-CSCF.

Step 206: The S-CSCF sends the request for re-registration to the CPM application server.

Step 207: The CPM application server receives the request for re-registration, generates a new request which requests the S-CSCF to re-register the UE2 with CPM application server, and sends the new request to the S-CSCF.

Step 208: The S-CSCF receives the new request and sends the UE2 a message requesting for re-registering the UE2 with the CPM application server.

Step 209: The UE2 initiates re-registration and registers with the CPM application server.

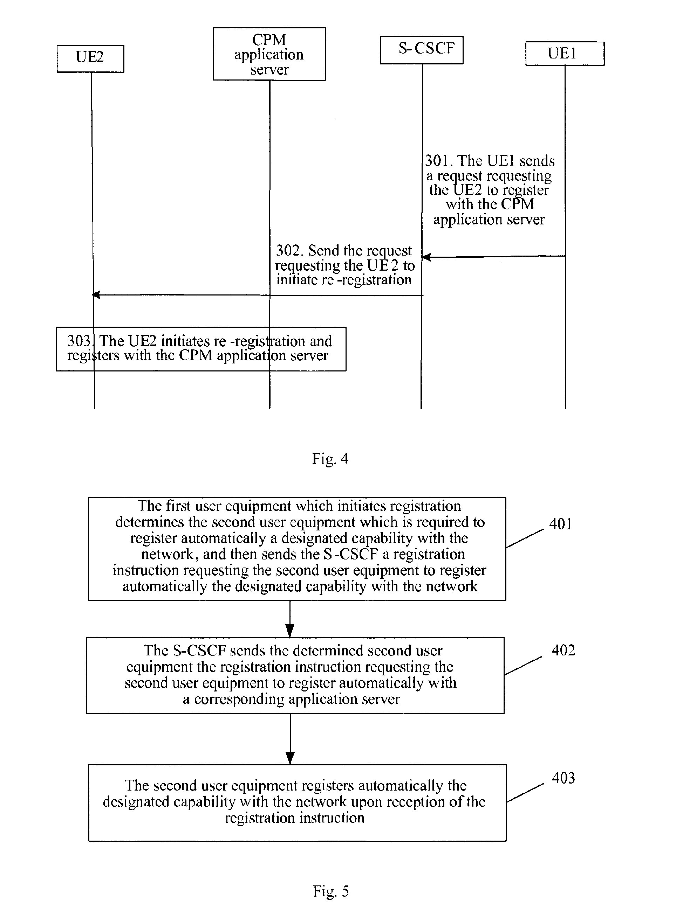

Referring to Figure 4, it is a schematic diagram illustrating a flow of registering automatically user equipment which has not registered CPM application service with a CPM application server in an IMS system according to another embodiment of the invention.

In the case of being authorized by the system, a user equipment which initiates registration may send directly via an S-CSCF to another user equipment, which is required to register automatically, a request for re-registering with a CPM application server. It is assumed in the embodiment that a CPM user registers in a network two user equipments UE 1 and UE2 with capabilities of acting as clients of a CPM application server, where the UE1 has registered with the CPM application server during registration in the IMS network, and the UE2 has registered with a game server during registration in the IMS network. In this embodiment, device information of the UE2 is obtained by the UE1 in some ways, such as through automatic web page query or viewing the device information configured in advance. Besides, the IMS system allows the UE1 to send to the UE2 directly via the S-CSCF a request for re-registering the UE2 with the CPM application server. Specifically, automatic registration procedure in this embodiment mainly includes the following steps.

Step 301: The user determines that the UE2 is required to register automatically with the CPM application server and sends to the S-CSCF via the UE1 a request for automatic registering the UE2 with the CPM application server.

Step 302: The S-CSCF receives the request and sends to the UE2 a message requesting the UE2 to register automatically with the CPM application server.

Step 303: The UE2 initiates re-registration and registers automatically with the CPM application server.

Due to presetting of the user or addition of an accessory to a user equipment, capabilities of the user equipment registering with the IMS system registers in the network may have not embodied completely the existing capability of the user equipment, and it is required to register automatically a designated capability with the network.

Referring to Figure 5, it is a flow chart illustrating a method for registering automatically a designated capability by user equipment with a network according to an embodiment of the invention.

The designated capability in this embodiment may be part or all of capabilities of the user equipment. Network entities involved mainly include a user equipment which initiates registration (referred to as a first user equipment in this embodiment for distinguishing), another user equipment which is required to register automatically a designated capability with the network (referred to as a second user equipment in this embodiment for distinguishing), and a network entity (i.e. an S-CSCF function entity). In a specific implementation, SIP messages can be used for communication between the network entities. For example, an INVITE message can be used between the first user equipment and the S-CSCF, and a NOTIFY message carrying corresponding registration instruction information or parameters can be used between the S-CSCF and the second user equipment. Specifically, a registration procedure in this embodiment mainly includes the following steps.

Block 401: The first user equipment which initiates registration determines the second user equipment which is required to register automatically a designated capability with the network, and then sends the S-CSCF a registration instruction requesting the second user equipment to register automatically the designated capability with the network.

In a specific implementation, the first user equipment may determine the second user equipment which is required to register automatically the designated capability with the network in various ways, such as according to equipment information configured in advance, through automatic network search, or through interrogating the network. The details are as follows.

Firstly, the first user equipment requests the network via the S-CSCF for a view of information of the second user equipment which is required to register the designated capability with the network. Secondly, the network returns via the S-CSCF the information of the second user equipment which is required to register the designated capability with the network to the first user equipment which initiates registration. Finally, the first user equipment may determine the second user equipment which is required to register the designated capability with the network according to the feedback information.

Block 402: The S-CSCF sends the determined second user equipment the registration instruction requesting the second user equipment to register automatically with a corresponding application server.

Block 403: The second user equipment registers automatically the designated capability with the network upon reception of the registration instruction.

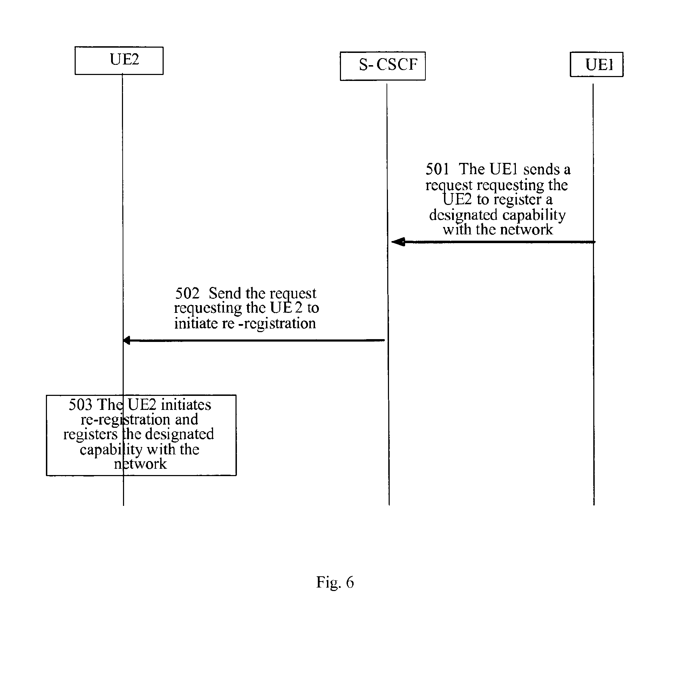

Referring to Figure 6, it is a schematic diagram illustrating a flow of registering automatically a designated capability of user equipment with a network according to an embodiment of the invention.

In the case of being authorized by the system, a user equipment which initiates registration may send directly via an S-CSCF another user equipment, which is required to register automatically a designated capability with a network, a request for re-registering the designated capability with the network. It is assumed in embodiment that there are two user equipments: UE1 and UE2, where capability information of the UE2 is obtained by the UE1 in some ways, such as through automatic web page query or viewing device information configured in advance. Specifically, automatic registration procedure in this embodiment mainly includes the following steps.

Step 501: The user determines that the UE2 is required to register automatically a designated capability with the network, and sends the S-CSCF via the UE1 a request requesting the UE2 to register automatically the designated capability with the network.

Step 502: The S-CSCF receives the request and sends the UE2 a message requesting the UE2 to register automatically the designated capability with the network.

Step 503: The UE2 initiates re-registration and registers automatically the designated capability with the network.

Furthermore, the user equipment may be required to make a re-registration due to reasons such as that the existing bearer network changes and that the user equipment has to be switched from the existing network to a new network.

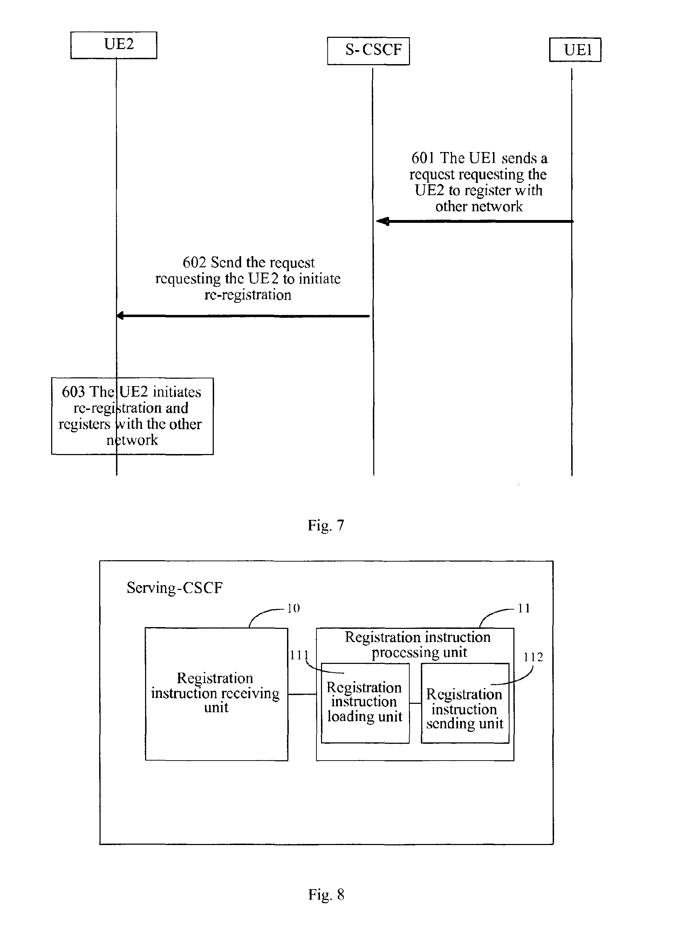

Referring to Figure 7, it is a schematic diagram illustrating a flow of registering automatically user equipment with another network in an IMS system according to an embodiment of the invention.

In the case of being authorized by the system, a user equipment which initiates registration may send directly via an S-CSCF another user equipment, which is required to register automatically with another network, a request for re-registering with another network. It is assumed in this embodiment that there are two user equipments UE 1 and UE2, where device information of the UE2 is obtained by the UE1 in some ways, such as through automatic web page query or viewing the device information configured in advance. Specifically, automatic registration procedure in this embodiment mainly includes the following steps.

Step 601: The user determines that the UE2 is required to register automatically with another network, and sends the S-CSCF via the UE1 a request requesting the UE2 to register automatically with another network.

Step 602: The S-CSCF receives the request and sends the UE2 a message requesting the UE2 to register automatically the designated capability with another network.

Step 603: The UE2 initiates re-registration and registers automatically the designated capability with another network.

Another aspect of the invention will be described below.

Referring to Figure 8, it is a schematic diagram illustrating a function module of an S-CSCF for registering automatically user equipment with an application server according to an embodiment of the invention.

As illustrated in Figure 8, the S-CSCF function entity in an embodiment of the present invention includes a registration instruction receiving unit 10 and a registration instruction processing unit 11.

The registration instruction receiving unit 10 is adapted to receive a registration instruction requesting the second user equipment to register automatically with a corresponding application server, a registration instruction requesting the second user equipment to register automatically a designated capability with the network, or a registration instruction requesting the second user equipment to register automatically with another network. Here, the second user equipment is a user equipment which is determined by the first user equipment to be required to register automatically with the application server, to register automatically the designated capability with the network, or to register automatically with another network.

The registration instruction processing unit 11 is adapted to send, in accordance with a request of the first user equipment which initiates registration, the registration instruction to the second user equipment which is required to register automatically with the application server or is required to register automatically the designated capability with an IP multimedia subsystem or is required to register automatically with another network.

In accordance with the logical functions implemented by the registration instruction processing unit 11 in this embodiment, the registration instruction processing unit 11 may include a registration instruction loading unit 111 and a registration instruction sending unit 112.

The registration instruction loading unit 111 is adapted to load the registration instruction into a message sent to the second user equipment which is required to register automatically with the application server or is required to register automatically the designated capability with the IP multimedia subsystem or is required to register automatically with another network.

The registration instruction sending unit 112 is adapted to send the message carrying the registration instruction to the second user equipment which is required to register automatically with the application server or is required to register automatically the designated capability with the IP multimedia subsystem or is required to register automatically with another network.

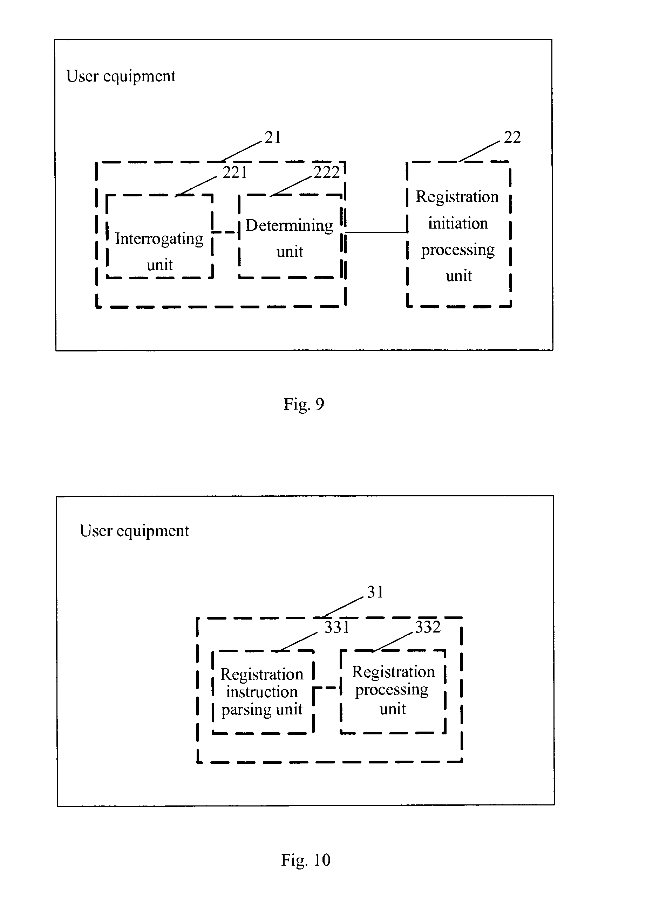

Referring to Figure 9, it is a schematic diagram illustrating a function module of user equipment initiating registration for registering automatically user equipment with an application server according to an embodiment of the invention. As illustrated in Figure 9, the user equipment in this embodiment includes a determination processing unit 21 and a registration initiation processing unit 22.

The determination processing unit 21 is adapted to determine a user equipment which is required to register automatically with the application server or register automatically a designated capability with an IP multimedia subsystem or register automatically with another network.

The registration initiation processing unit 22 is adapted to send an S-CSCF a registration instruction requesting the determined user equipment to register automatically with the corresponding application server or register automatically the designated capability with the IP multimedia subsystem or register automatically with another network.

Similarly, in accordance with the logical functions implemented by the determination processing unit 22, the determination processing unit 22 includes an interrogation unit 221 and a determining unit 222.

The interrogation unit 221 is adapted to request via the S-CSCF the application server for a view of information of the user equipment which has not registered application service or request the network for a view of the information of the user equipment which has not registered the designated capability with the IP multimedia subsystem or which is required to register automatically with another network.

The determining unit 222 is adapted to determine the user equipment which is required to register automatically with the application server or register the designated capability with the IP multimedia subsystem or register automatically with another network, in accordance with the information of the user equipment which has not registered the application service or the information of the user equipment which has not registered the designated capability with the IP multimedia subsystem or is required to register automatically with another network. The information is returned from the application server or the network.

Referring to Figure 10, it is a schematic diagram illustrating a function module of user equipment making automatic registration for registering automatically user equipment with an application server according to an embodiment of the invention. As illustrated in Figure 10, the user equipment in this embodiment includes an automatic registration processing unit 31.

The automatic registration processing unit 31 is adapted to register automatically with a corresponding application server or an IP multimedia subsystem or another network in accordance with a registration instruction sent from an S-CSCF.

Similarly, in accordance with the logical functions implemented by the automatic registration processing unit 31, the automatic registration processing unit 31 includes a registration instruction parsing unit 331 and a registration processing unit 322.

The registration instruction parsing unit 331 is adapted to obtain the registration instruction by parsing a message sent from the S-CSCF.

The registration processing unit 322 is adapted to register automatically with the corresponding service application or register automatically the designated capability with the IP multimedia subsystem or register automatically with another network in accordance with the registration instruction.

It shall be noted that the user equipment as illustrated in Figure 9 can be combined with the user equipment in Figure 10 into new equipment. For example, the user equipment as illustrated in Figure 9 is combined with the automatic registration processing unit 31 included in the user equipment in Figure 10, and the automatic registration processing unit 31 can be implemented as illustrated in Figure 10 as well. It shall further be noted that the first user equipment and second user equipment above may belong to the same user or different users.

The foregoing descriptions are merely illustrative embodiments of the invention, and it shall be appreciated that those ordinarily skilled in the art can further make numerous adaptations and variations without departing from the scope of the invention.

## Claims

1. A method for automatically registering user equipment with an application server, comprising:
receiving, by a serving-call session control function entity, S-CSCF, of an IP Multimedia Subsystem, a registration instruction requesting a second user equipment to register automatically with an application server, wherein the second user equipment is a user equipment which is determined by a first user equipment to be required to register automatically with the application server; and
sending, by the S-CSCF, the second user equipment the registration instruction requesting the second user equipment to register automatically with the application server, so as to enable the second user equipment in reception of the registration instruction to register automatically with the application server;
wherein the determination, by the first user equipment, of the second user equipment which is required to register automatically with the application server is **characterized by**
requesting, by the first user equipment which initiates registration, the application server for a view of information of user equipment which has not registered its application service;
receiving, by the first user equipment which initiates registration, the information of the user equipment which has not registered the application service returned from the application server; and
determining, by the first user equipment which initiates registration, the second user equipment which is required to register automatically with the application server.

2. The method according to claim 1, wherein the determining, by the first user equipment, of the second user equipment which is required to register automatically with the application server comprises:
determining, by the first user equipment which initiates registration, the second user equipment which is required to register automatically with the application server in accordance with device information configured in advance or through automatic network search.

3. The method according to any one of claims 1 or 2, wherein the registration instruction requesting the second user equipment to register automatically with the application server, which is received by the serving-call session control function entity, is sent from the application server, and before the serving-call session control function entity receives the registration instruction requesting the second user equipment to register automatically with the application server, the method further comprises:
receiving, by the serving-call session control function entity, a registration request sent from the first user equipment; and
sending, by the serving-call session control function entity, the registration request to a application server.

4. The method according to any one of claims 1 or 2, wherein the application server comprises a Converged IP message application server, a Push To Talk over Cellular application server, an Instant Message application server, or a Presence application server.

5. A method for automatically registering user equipment with a network, comprising:
receiving, by a serving-call session control function entity, S-CSCF, of an IP Multimedia Subsystem, a registration instruction requesting a second user equipment to register automatically a designated capability with a network, wherein the second user equipment is a user equipment which is determined by a first user equipment to be required to register automatically the designated capability with the network; and
sending, by the S-CSCF, to the second user equipment the registration instruction requesting the second user equipment to register automatically the designated capability with the network, so as to enable the second user equipment in reception of the registration instruction to register automatically the designated capability with the network.

6. The method according to claim 5, wherein the determining, by the first user equipment, of the second user equipment which is required to register automatically the designated capability with the network comprises:
requesting, by the first user equipment which initiates registration, the network for a view of information of user equipment which has not registered the designated capability with the network;
receiving, by the first user equipment which initiates registration, the information of the user equipment which has not registered the designated capability with the network returned from the network; and
determining, by the first user equipment which initiates registration, the second user equipment which is required to register automatically the designated capability with the network.

7. The method according to claim 5, wherein the determining, by the first user equipment, of the second user equipment which is required to register automatically the designated capability with the network comprises:
determining, by the first user equipment which initiates registration, the second user equipment which is required to register automatically the designated capability with the network in accordance with device information configured in advance.

8. A user equipment comprising:
a determination processing unit adapted to determine a second user equipment which is required to register automatically with an application server or register automatically a designated capability with an IP multimedia subsystem network or register automatically with another network; and
a registration initiation processing unit adapted to send a registration instruction requesting the determined user equipment to register automatically with the application server or register automatically the designated capability with the IP multimedia subsystem network or register automatically with another network;
wherein the determination processing unit is further **characterized by** comprising
an interrogation unit adapted to request, via a serving-call session control function entity, the application server for a view of information of the second user equipment or request a network for a view of the information of the second user equipment; and
a determining unit adapted to determine the second user equipment which is required to register automatically with the application server or register the designated capability with the IP multimedia subsystem or register automatically with another network in accordance with the information of the second user equipment returned from the application server or the network.

9. The user equipment according to claim 8, further comprising:
an automatic registration processing unit adapted to register automatically with the application server or the IP multimedia subsystem network or another network in accordance with the registration instruction sent from a serving-call session control function entity, S-CSCF, of an IP Multimedia Subsystem.

## Patentansprüche

1. Verfahren zum automatischen Registrieren eines Anwendergeräts bei einem Anwendungsserver, das Folgendes umfasst:
Empfangen durch eine Dienstanrufsitzung-Steuerfunktionsentität, S-CSCF, eines IP-Multimediauntersystems einer Registrierungsanweisung, die ein zweites Anwendergerät auffordert, sich automatisch bei einem Anwendungsserver zu registrieren, wobei das zweite Anwendergerät ein Anwendergerät ist, das durch ein erstes Anwendergerät bestimmt wird und für das erforderlich ist, sich bei dem Anwendungsserver automatisch zu registrieren; und
Senden durch die S-CSCF der Registrierungsanweisung zu dem zweiten Anwendergerät, um das zweite Anwendergerät aufzufordern, sich bei dem Anwendungsserver automatisch zu registrieren, um so dem zweiten Anwendergerät zu ermöglichen, sich bei Empfang der Registrierungsanweisung bei dem Anwendungsserver automatisch zu registrieren;
wobei das Bestimmen durch das erste Anwendergerät des zweiten Anwendergeräts, das aufgefordert wird, sich bei dem Anwendungsserver automatisch registrieren, **gekennzeichnet ist durch**
Auffordern **durch** das erste Anwendergerät, das die Registrierung initiiert, des Anwendungsservers, Informationen über ein Anwendergerät zu erhalten, das seinen Anwendungsdienst nicht registriert hat;
Empfangen **durch** das erste Anwendergerät, das die Registrierung initiiert, der Informationen über das Anwendergerät, das den Anwendungsdienst nicht registriert hat, die von dem Anwendungsserver zurückgeleitet werden; und
Bestimmen **durch** das erste Anwendergerät, das die Registrierung initiiert, des zweiten Anwendergeräts, für das erforderlich ist, sich bei dem Anwendungsserver automatisch zu registrieren.

2. Verfahren nach Anspruch 1, wobei das Bestimmen durch das erste Anwendergerät des zweiten Anwendergeräts, für das erforderlich ist, sich bei dem Anwendungsserver automatisch zu registrieren, Folgendes umfasst:
Bestimmen durch das erste Anwendergerät, das die Registrierung initiiert, des zweiten Anwendergeräts, für das erforderlich ist, sich bei dem Anwendungsserver automatisch zu registrieren, in Übereinstimmung mit Vorrichtungsinformationen, die im Voraus oder durch automatische Netzsuche konfiguriert werden.

3. Verfahren nach einem der Ansprüche 1 oder 2, wobei die Registrierungsanweisung, die das zweite Anwendergerät, auffordert, sich bei dem Anwendungsserver automatisch zu registrieren, die durch die Dienstanrufsitzung-Steuerfunktionsentität empfangen wird, von dem Anwendungsserver gesendet wird, wobei das Verfahren, bevor die Dienstanrufsitzung-Steuerfunktionsentität die Registrierungsanweisung empfängt, die das zweite Anwendergerät, auffordert, sich bei dem Anwendungsserver automatisch zu registrieren, ferner Folgendes umfasst:
Empfangen durch die Dienstanrufsitzung-Steuerfunktionsentität einer Registrierungsanforderung, die von dem ersten Anwendergerät gesendet wird; und
Senden durch die Dienstanrufsitzung-Steuerfunktionsentität der Registrierungsanforderung zu einem Anwendungsserver.

4. Verfahren nach einem der Ansprüche 1 oder 2, wobei der Anwendungsserver einen konvergierten IP-Nachrichtenanwendungsserver, einen Zellulär-Push-to-Talk-Anwendungsserver, einen Instant-Message-Anwendungsserver oder einen Präsenz-Anwendungsserver umfasst.

5. Verfahren zum automatischen Registrieren eines Anwendergeräts in einem Netz, das Folgendes umfasst:
Empfangen durch eine Dienstanrufsitzung-Steuerfunktionsentität, S-CSCF, eines IP-Multimediauntersystems einer Registrierungsanweisung, die ein zweites Anwendergerät auffordert, eine bezeichnete Fähigkeit in einem Netz automatisch zu registrieren, wobei das zweite Anwendergerät ein Anwendergerät ist, das durch ein erstes Anwendergerät bestimmt wird und für das erforderlich ist, die bezeichnete Fähigkeit in dem Netz automatisch zu registrieren; und
Senden durch die S-CSCF zu dem zweiten Anwendergerät der Registrierungsanweisung, die das zweite Anwendergerät auffordert, die bezeichnete Fähigkeit in dem Netz automatisch zu registrieren, um so dem zweiten Anwendergerät zu ermöglichen, bei Empfang der Registrierungsanweisung die bezeichnete Fähigkeit in dem Netz automatisch zu registrieren.

6. Verfahren nach Anspruch 5, wobei das Bestimmen durch das erste Anwendergerät des zweiten Anwendergeräts, für das erforderlich ist, die bezeichnete Fähigkeit in dem Netz automatisch zu registrieren, Folgendes umfasst:
Auffordern durch das erste Anwendergerät, das die Registrierung initiiert, des Netzes, Informationen über ein Anwendergerät, das die bezeichnete Fähigkeit in dem Netz nicht registriert hat, zu erhalten;
Empfangen durch das erste Anwendergerät, das die Registrierung initiiert, der Informationen über das Anwendergerät, das die bezeichnete Fähigkeit in dem Netz nicht registriert hat, die von dem Netz zurückgeleitet werden; und
Bestimmen durch das erste Anwendergerät, das die Registrierung initiiert, des zweiten Anwendergeräts, für das erforderlich ist, die bezeichnete Fähigkeit in dem Netz automatisch zu registrieren.

7. Verfahren nach Anspruch 5, wobei das Bestimmen durch das erste Anwendergerät des zweiten Anwendergeräts, für das erforderlich ist, die bezeichnete Fähigkeit in dem Netz automatisch zu registrieren, Folgendes umfasst:
Bestimmen durch das erste Anwendergerät, das die Registrierung initiiert, des zweiten Anwendergeräts, für das erforderlich ist, die bezeichnete Fähigkeit in dem Netz automatisch zu registrieren, in Übereinstimmung mit Vorrichtungsinformationen, die im Voraus konfiguriert werden.

8. Anwendergerät, das Folgendes umfasst:
eine Bestimmungsverarbeitungseinheit, die dafür ausgelegt ist, ein zweites Anwendergerät zu bestimmen, für das erforderlich ist, sich bei einem Anwendungsserver automatisch zu registrieren oder eine bezeichnete Fähigkeit in einem IP-Multimediauntersystem automatisch zu registrieren oder sich bei einem weiteren Netz automatisch zu registrieren; und
eine Registrierungsinitiierungs-Verarbeitungseinheit, die dafür ausgelegt ist, eine Registrierungsanweisung zu senden, die das bestimmte Anwendergerät, auffordert, sich bei dem Anwendungsserver automatisch zu registrieren oder die bezeichnete Fähigkeit bei dem IP-Multimediauntersystem-Netz automatisch zu registrieren oder sich bei einem weiteren Netz automatisch zu registrieren;
wobei die Bestimmungsverarbeitungseinheit ferner **dadurch gekennzeichnet ist, dass** sie Folgendes umfasst:
eine Abfrageeinheit, die dafür ausgelegt ist, über eine Dienstanrufsitzung-Steuerfunktionsentität den Anwendungsserver aufzufordern, Informationen über das zweite Anwendergerät, zu erhalten, oder ein Netz aufzufordern, Informationen über das zweite Anwendergerät zu erhalten; und
eine Bestimmungseinheit, die dafür ausgelegt ist, das zweite Anwendergerät zu bestimmen, für das erforderlich ist, sich bei dem Anwendungsserver automatisch zu registrieren oder die bezeichnete Fähigkeit bei dem IP-Multimediauntersystem automatisch zu registrieren, oder sich bei einem weiteren Netz automatisch zu registrieren, in Übereinstimmung mit den Informationen des zweiten Anwendergeräts, die von dem Anwendungsserver oder von dem Netz zurückgeleitet werden.

9. Anwendergerät nach Anspruch 8, das ferner Folgendes umfasst:
eine Verarbeitungseinheit für automatisches Registrieren, die dafür ausgelegt ist, sich in Übereinstimmung mit der Registrierungsanweisung, die von einer Dienstanrufsitzungs-Steuerfunktionsentität, S-CSCF, eines IP-Multimediauntersystems gesendet wird, bei dem Anwendungsserver oder dem IP-Multimediauntersystem-Netz oder einem weiteren Netz automatisch zu registrieren.

## Revendications

1. Procédé permettant d'enregistrer automatiquement un équipement utilisateur auprès d'un serveur d'applications, comprenant les étapes suivantes :
recevoir, par une entité de fonction de commande de session d'appel de desserte, S-CSCF, d'un sous-système multimédia IP, une instruction d'enregistrement demandant à un deuxième équipement utilisateur de s'enregistrer automatiquement auprès d'un serveur d'applications, le deuxième équipement utilisateur étant un équipement utilisateur qui est déterminé par un premier équipement utilisateur devant s'enregistrer automatiquement auprès du serveur d'applications ; et
envoyer, par le S-CSCF, au deuxième équipement utilisateur l'instruction d'enregistrement demandant au deuxième équipement utilisateur de s'enregistrer automatiquement auprès du serveur d'applications, afin de permettre au deuxième équipement utilisateur recevant l'instruction d'enregistrement de s'enregistrer automatiquement auprès du serveur d'applications ;
la détermination, par le premier équipement utilisateur, du deuxième équipement utilisateur devant s'enregistrer automatiquement auprès du serveur d'applications étant **caractérisée par** les étapes suivantes :
demander, par le premier équipement utilisateur qui initie un enregistrement, au serveur d'applications une vue d'informations d'un équipement utilisateur qui n'a pas enregistré son service d'applications ;
recevoir, par le premier équipement utilisateur qui initie un enregistrement, les informations de l'équipement utilisateur qui n'a pas enregistré le service d'applications retournées à partir du serveur d'applications ; et
déterminer, par le premier équipement utilisateur qui initie un enregistrement, le deuxième équipement utilisateur qui doit s'enregistrer automatiquement auprès du serveur d'applications.

2. Procédé selon la revendication 1, dans lequel l'étape consistant à déterminer, par le premier équipement utilisateur, le deuxième équipement utilisateur qui doit s'enregistrer automatiquement auprès du serveur d'applications comprend :
déterminer, par le premier équipement utilisateur qui initie un enregistrement, le deuxième équipement utilisateur qui doit s'enregistrer automatiquement auprès du serveur d'applications selon des informations de dispositif configurées à l'avance ou par l'intermédiaire d'une recherche de réseau automatique.

3. Procédé selon l'une quelconque des revendications 1 ou 2, dans lequel l'instruction d'enregistrement demandant au deuxième équipement utilisateur de s'enregistrer automatiquement auprès du serveur d'applications, qui est reçue par l'entité de fonction de commande de session d'appel de desserte, est envoyée à partir du serveur d'applications, et avant que l'entité de fonction de commande de session d'appel de desserte ne reçoive l'instruction d'enregistrement demandant au deuxième équipement utilisateur de s'enregistrer automatiquement auprès du serveur d'applications, le procédé comprenant en outre les étapes suivantes :
recevoir, par l'entité de fonction de commande de session d'appel de desserte, une requête d'enregistrement envoyée à partir du premier équipement utilisateur ; et
envoyer, par l'entité de fonction de commande de session d'appel de desserte, la requête d'enregistrement à un serveur d'applications.

4. Procédé selon l'une quelconque des revendications 1 ou 2, dans lequel le serveur d'applications comprend un serveur d'applications de messages IP convergés, un serveur d'applications de messagerie vocale instantanée sur cellulaire, un serveur d'applications de messagerie instantanée, ou un serveur d'applications de présence.

5. Procédé permettant d'enregistrer automatiquement un équipement utilisateur auprès d'un réseau, comprenant les étapes suivantes :
recevoir, par une entité de fonction de commande de session d'appel de desserte, S-CSCF, d'un sous-système multimédia IP, une instruction d'enregistrement demandant à un deuxième équipement utilisateur d'enregistrer automatiquement une possibilité désignée auprès d'un réseau, le deuxième équipement utilisateur étant un équipement utilisateur qui est déterminé par un premier équipement utilisateur devant enregistrer automatiquement la possibilité désignée auprès du réseau ; et
envoyer, par le S-CSCF, au deuxième équipement utilisateur l'instruction d'enregistrement demandant au deuxième équipement utilisateur d'enregistrer automatiquement la possibilité désignée auprès du réseau, afin de permettre au deuxième équipement utilisateur recevant l'instruction d'enregistrement d'enregistrer automatiquement la possibilité désignée auprès du réseau.

6. Procédé selon la revendication 5, dans lequel l'étape consistant à déterminer, par le premier équipement utilisateur, le deuxième équipement utilisateur qui doit enregistrer automatiquement la possibilité désignée auprès du réseau comprend :
demander, par le premier équipement utilisateur qui initie un enregistrement, au réseau une vue d'informations d'un équipement utilisateur qui n'a pas enregistré la possibilité désignée auprès du réseau ;
recevoir, par le premier équipement utilisateur qui initie un enregistrement, les informations de l'équipement utilisateur qui n'a pas enregistré la possibilité désignée auprès du réseau retournées à partir du réseau ; et
déterminer, par le premier équipement utilisateur qui initie un enregistrement, le deuxième équipement utilisateur qui doit enregistrer automatiquement la possibilité désignée auprès du réseau.

7. Procédé selon la revendication 5, dans lequel l'étape consistant à déterminer, par le premier équipement utilisateur, le deuxième équipement utilisateur qui doit enregistrer automatiquement la possibilité désignée auprès du réseau comprend :
déterminer, par le premier équipement utilisateur qui initie un enregistrement, le deuxième équipement utilisateur qui doit enregistrer automatiquement la possibilité désignée auprès du réseau selon des informations de dispositif configurées à l'avance.

8. Équipement utilisateur comprenant :
une unité de traitement de détermination conçue pour déterminer un deuxième équipement utilisateur qui doit s'enregistrer automatiquement auprès d'un serveur d'applications ou enregistrer automatiquement une possibilité désignée auprès d'un réseau de sous-système multimédia IP ou s'enregistrer automatiquement auprès d'un autre réseau ; et
une unité de traitement d'initiation d'enregistrement conçue pour envoyer une instruction d'enregistrement demandant à l'équipement utilisateur déterminé de s'enregistrer automatiquement auprès du serveur d'applications ou d'enregistrer automatiquement la possibilité désignée auprès du réseau de sous-système multimédia IP ou de s'enregistrer automatiquement auprès d'un autre réseau ;
l'unité de traitement de détermination étant en outre **caractérisée en ce qu'**elle comprend :
une unité d'interrogation conçue pour demander, par l'intermédiaire d'une entité de fonction de commande de session d'appel de desserte, au serveur d'applications une vue d'informations du deuxième équipement utilisateur ou demander à un réseau une vue des informations du deuxième équipement utilisateur ; et
une unité de détermination conçue pour déterminer le deuxiémne équipement utilisateur qui doit s'enregistrer automatiqueinent auprès du serveur d'applications ou enregistrer la possibilité désignée auprès du sous-systéme multimédia IP ou s'enregistrer automatiquement auprès d'un autre réseau selon les informations du deuxième équipement utilisateur retournées à partir du serveur d'applications ou du réseau.

9. Équipement utilisateur selon la revendication 8, comprenant en outre :
une unité de traitement d'enregistrement automatique conçue pour s'enregistrer automatiquement auprès du serveur d'applications ou du réseau de sous-système multimédia IP ou d'un autre réseau selon l'instruction d'enregistrement envoyée à partir d'une entité de fonction de commande de session d'appel de desserte, S-CSCF, d'un sous-système multimédia IP.
